# DEMANDE DE BREVET EUROPEEN

(11) **EP 0 820 899 A1**
(43) Date de publication de la demande: **28.01.1998**
(21) Numéro de dépôt: 97401748.5
(22) Date de dépôt: 21.07.1997
(51) Int. Cl.: B60Q 1/076

(54) **Dispositif correcteur de l'orientation d'un faisceau de projecteur de véhicule automobile en fonction de consignes discretes, et sélecteur associé**

(30) Priorité: 22.07.1996 FR 9609165
(71) Demandeur: VALEO VISION, 93000 Bobigny (FR)
(72) Inventeur: Metayer, Guy, 92150 Suresnes (FR); Roullet, Sylvain, 94500 Champigny Sur Marne (FR)
(74) Mandataire: Le Forestier, Eric

(57) **Abrégé**

Un correcteur (C) de l'orientation du faisceau d'un projecteur de véhicule automobile en fonction de signaux de commande présents sur des conducteurs (21-23) comprend un moteur électrique (M) entraînant une pièce optique du projecteur et un ensemble de commutation comportant des pistes conductrices (30-32) reliées aux conducteurs et des moyens formant curseur reliés au moteur et entraînés par lui sur les pistes, pour définir des positions d'arrêt discrètes (0-3) du moteur.

Selon l'invention, un curseur unique (40) est relié à une première borne d'alimentation du moteur, dont la seconde borne est reliée à l'un des conducteurs (21). Il est prévu deux pistes (31, 32) reliées à deux autres conducteurs (22, 23) aptes à alternativement appliquer au dispositif un même potentiel d'alimentation (+V; masse). Les deux pistes conductrices comportent des zones de contact avec le curseur, zones de contact dont des extrémités définissent les positions d'arrêt. La position mutuelle desdites zones de contact est telle que dans une position d'arrêt définie par l'une des pistes, le curseur est en contact avec une zone de contact de l'autre piste.

L'invention concerne également un sélecteur associé.

## Description

La présente invention a trait d'une façon générale aux dispositifs de commande de l'orientation des faisceaux lumineux de projecteurs des véhicules automobiles.

On connaît déjà par EP-A-0 291 379 un tel dispositif de commande, dont la vocation première et de donner aux faisceaux lumineux des projecteurs du véhicule une orientation en site correcte pour différentes conditions de charge du véhicule, qui lui confèrent différentes positions d'assiette.

Dans ce dispositif connu, on prévoit sur le tableau de bord du véhicule un sélecteur manuel relié par un jeu de câbles électriques à chacun des projecteurs. Dans chaque projecteur, on prévoit un correcteur électrique doté d'un système de commutation mettant en jeu des curseurs se déplaçant sur un motif de pistes conductrices de manière à assurer, en fonction de la répartition des signaux électriques sur le faisceau électrique de câbles, le déplacement motorisé du réflecteur jusqu'à la position de consigne désignée par cette répartition particulière et faisant partie d'un ensemble de N positions discrètes.

Cette solution connue a pour avantage d'éviter le recours à des circuits électroniques d'asservissement de position dans les projecteurs, et donc de diminuer le coût de revient de l'ensemble.

Mais un inconvénient de ce dispositif connu réside en ce que le nombre de câbles du faisceau électrique de liaison entre le sélecteur et chaque projecteur est important (typiquement six câbles pour un dispositif à quatre positions discrètes). L'économie réalisée par l'absence de circuit électronique est donc partiellement neutralisée par l'accroissement du coût du câblage.

La présente invention vise à proposer un nouveau dispositif de commande d'orientation qui reste dépourvu de circuit électronique d'asservissement, tout en nécessitant un nombre de conducteurs électriques limité entre le sélecteur et le correcteur prévu dans chacun des projecteurs.

Ainsi la présente invention propose un dispositif correcteur de l'orientation du faisceau lumineux d'un projecteur de véhicule automobile en fonction de signaux de commande présents sur un faisceau électrique de conducteurs, le dispositif correcteur comprenant un moteur électrique entraînant une pièce optique du projecteur et un ensemble de commutation comportant une pluralité de pistes conductrices reliées aux divers conducteurs du faisceau électrique et des moyens formant curseur reliés électriquement au moteur électrique et dont les mouvements sont commandés par ledit moteur pour qu'ils se déplacent sur lesdites pistes conductrices, de manière à définir un ensemble de position d'arrêt discrètes du moteur, dispositif caractérisé en ce que les moyens formant curseur comprennent un curseur unique relié à une première borne d'alimentation du moteur, en ce qu'une seconde borne d'alimentation du moteur est reliée à un conducteur du faisceau électrique, et en ce qu'il est prévu deux pistes conductrices reliées à deux autres conducteurs du faisceau électrique aptes à alternativement appliquer au dispositif un même potentiel d'alimentation, les deux pistes conductrices comportant des zones de contact avec le curseur, zones de contact dont des extrémités définissent les positions d'arrêt du moteur et du curseur, la position mutuelle desdites zones de contact étant telle que dans une position d'arrêt définie par l'une des pistes conductrices, le curseur est en contact avec une zone de contact de l'autre piste conductrice.

Des aspects préférés, mais non limitatifs, de ce dispositif correcteur sont les suivants :
- ledit curseur est relié à la première borne d'alimentation du moteur par une troisième piste conductrice.
- il est prévu une quatrième piste conductrice en contact avec le curseur dans une première position d'arrêt extrême et dont une extrémité éloignée de ladite première position d'arrêt extrême définit la seconde position d'arrêt extrême.
- ladite quatrième piste conductrice est reliée à un quatrième conducteur, d'inversion de mouvement, du faisceau électrique.
- ladite quatrième piste conductrice est reliée à l'une des deux premières pistes conductrices par l'intermédiaire d'une diode.
- chacune des deux premières pistes conductrices comprend deux zones de contact électriquement reliées l'une à l'autre.
- lesdites zones de contact couvrent des zones de déplacement du curseur essentiellement complémentaires.
- lesdites zones de contact des deux premières pistes conductrices se chevauchent et définissent des interstices mutuellement décalés, situés alternativement au niveau de la première piste conductrice et au niveau de la seconde piste conductrice.
- lesdites zones de contact des deux premières pistes conductrices sont électriquement reliées entre elles par des zones de liaison conductrices décalées par rapport à des plots de frottement repectivement associés aux première et seconde pistes conductrices.
- lesdites zones de contact des deux premières pistes conductrices sont électriquement reliées entre elles par des diodes, l'une des diodes étant branchée en direct entre un point de liaison de la piste conductrice associée au conducteur associé du faisceau électrique et une extrémité de ladite piste conductrice correspondant à une première position d'arrêt extrême, tandis que l'autre diode est branchée en inverse entre une point de liaison de la piste conductrice associée au conducteur associé du faisceau électrique et une extrémité de ladite piste conductrice correspondant à une seconde position d'arrêt extrême.
- le curseur est monté sur un arbre de sortie rotatif du moteur, et lesdites pistes conductrices sont disposées essentiellement concentriquement autour de l'axe dudit arbre de sortie.

Selon un deuxième aspect, la présente invention propose un dispositif sélecteur, notamment pour un dispositif correcteur tel que défini ci-dessus, destiné à appliquer sur des conducteurs d'un faisceau électrique des signaux de commande variant en fonction de la position d'un organe de manoeuvre du sélecteur, caractérisé en ce qu'il comprend :
des première et seconde pistes conductrices comportant des zones de contact localisées reliées électriquement entre elles au niveau de chaque piste conductrice et disposées de façon alternée sur une trajectoire donnée, lesdites première et seconde pistes conductrices étant reliées à deux premiers conducteurs du faisceau électrique, et
un curseur entraîné par l'organe de manoeuvre sur ladite trajectoire donnée et relié à une source d'alimentation électrique.

Des aspects préférés, mais non limitatifs, de ce dispositif sélecteur sont les suivants :
- il comprend en outre une troisième piste conductrice reliée à un troisième conducteur du faisceau électrique, et des moyens d'inversion de la polarité des signaux de commande présents entre l'un des premier et second conducteurs et le troisième conducteur.
- les moyens d'inversion de polarité comprennent un ensemble de contacts mobiles montés sur le curseur, des quatrième et cinquième pistes conductrices reliées respectivement aux deux bornes d'une source d'alimentation électrique, et un organe d'entraînement mû par le déplacement de l'organe de manoeuvre, apte à entraîner ledit curseur à contacts mobiles selon une course de déplacement tronquée à ses deux extrémités par rapport à la course de déplacement dudit organe d'entraînement, et apte à solliciter lesdits contacts mobiles du curseur pour les amener sélectivement en et hors de contact avec lesdites pistes conductrices.
- l'étendue de chaque partie de course tronquée du curseur est égale au pas des zones de contact sur ladite trajectoire donnée.
- l'organe d'entraînement et le curseur sont rotatifs autour d'un axe commun, et les pistes conductrices sont disposées généralement concentriquement audit axe commun.
- le curseur comporte des contacts mobiles dans deux branches situées de part et d'autre dudit axe commun et aptes à coopérer respectivement avec deux branches de l'élément d'entraînement situées de part et d'autre dudit axe commun, et la différence entre l'angle formé par les deux branches du curseur et l'angle formé par les deux branches de l'organe d'entraînement est égal au pas angulaire desdites zones de contact des première et seconde pistes conductrices sur la trajectoire donnée, qui est circulaire.
- l'organe d'entraînement présente la forme générale d'un "V", tandis que le curseur présente une forme générale rectiligne.
- chaque branche de l'organe d'entraînement comprend une rampe apte à solliciter les contacts mobiles de la branche associée du curseur et se terminant par un épaulement apte à coopérer avec un bord de la branche associée du curseur pour entraîner ce dernier.
- le curseur comporte quatre contacts mobiles consistant en quatre pontets, un premier pontet étant apte à relier la troisième piste conductrice à la cinquième piste conductrice, un second pontet étant apte à relier l'une des première et deuxième pistes conductrices à la quatrième piste conductrice, un troisième pontet étant apte à relier la troisième piste conductrice à la quatrième piste conductrice, et un quatrième pontet étant apte à relier l'une des première et deuxième pistes conductrices à la cinquième piste conductrice.
- les premier et second pontets sont situés dans une première branche du curseur, et les troisième et quatrième pontets sont situés dans une seconde branche du curseur.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :
la figure 1 est une vue schématique d'un dispositif sélecteur/correcteur selon une première forme de réalisation de l'invention,
la figure 2 est une vue schématique d'un dispositif sélecteur/correcteur selon une variante de cette première forme de réalisation de l'invention,
la figure 3 est une vue schématique d'un dispositif sélecteur/correcteur selon une deuxième forme de réalisation de l'invention,
la figure 4 est une vue schématique d'un dispositif sélecteur/correcteur selon une troisième forme de réalisation de l'invention,
la figure 5 est une vue schématique d'une variante de réalisation de la troisième forme de réalisation,
la figure 6 est une vue de détail de la partie sélecteur de la troisième forme de réalisation et de sa variante,
les figures 7a et 7b sont des vues partielles en coupe selon la ligne VII-VII de la figure 6, dans deux positions différentes,
la figure 8 est une vue en plan d'un élément du sélecteur de la figure 6,
la figure 9 est une vue en coupe selon la ligne IX-IX de la figure 8, et
les figures 10a à 10f illustrent le fonctionnement du sélecteur de la figure 6 dans diverses positions.

On notera préliminairement que, d'une figure à l'autre, des éléments ou parties identiques ou similaires sont désignés dans la mesure du possible par les mêmes signes de référence.

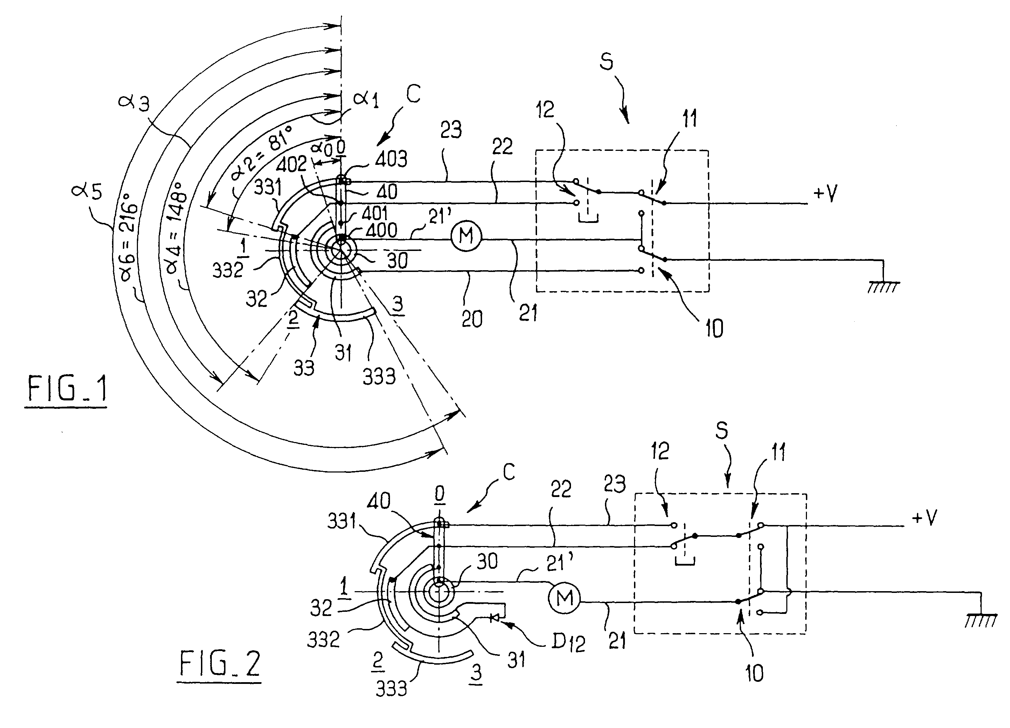

En référence tout d'abord à la figure 1, on a représenté schématiquement un dispositif de commande de l'orientation du faisceau lumineux émis par un projecteur de véhicule automobile, qui comprend un sélecteur S situé au niveau du tableau de bord du véhicule et comportant un organe de manoeuvre, un correcteur C situé dans le projecteur, et un faisceau de quatre conducteurs électriques 20 à 23 reliant le sélecteur au correcteur.

Le correcteur comporte un moteur électrique M dont la mise en marche et le sens de rotation sont commandés par des moyens de commutation à curseurs et à pistes conductrices prévus dans le sélecteur et dans le correcteur.

Par souci de simplification, les moyens de commutation côté sélecteur ont été illustrés ici par un jeu de trois commutateurs bipolaires 10, 11, 12, reliés à la masse et à une tension d'alimentation continue +V constituée par exemple par la tension de batterie du véhicule.

Le correcteur est du type dans lequel l'arbre de sortie du moteur subit une translation lors de sa rotation, une extrémité libre dudit arbre étant solidaire du réflecteur du projecteur pour effectuer les changements d'orientation en site du faisceau électrique, entre quatre positions discrètes prédéterminées notées 0 à 3 et correspondant à quatre positions angulaires prédéterminées, de préférence régulièrement réparties, dudit arbre de sortie.

Le correcteur comporte sur une partie fixe, telle qu'une plaque en matériau électriquement isolant, un jeu de quatre pistes conductrices 30 à 33 dont la configuration va être décrite plus loin.

Il est prévu, en coopération avec ces pistes conductrices, un curseur 40 qui est entraîné en rotation par l'arbre de sortie du moteur M, autour de l'axe dudit arbre, ledit curseur s'étendant radialement et possédant quatre plots de contact glissants alignés 400 à 403 destinés à coopérer avec les différentes pistes conductrices.

On va maintenant décrire la configuration des pistes conductrices 30 à 33 selon cette première forme de réalisation.

De l'intérieur vers l'extérieur, il est prévu :
- une première piste conductrice 30 annulaire et continue, centrée sur l'axe de rotation du curseur 40;
- une deuxième piste conductrice 31, concentrique avec la piste conductrice 30 et s'étendant entre une première position angulaire α0 proche de la position 0 du curseur et une seconde position angulaire a6 correspondant à la troisième position 3 du curseur;
- une troisième piste conductrice 32, concentrique avec les pistes conductrices 30 et 31 et s'étendant entre une position angulaire α1 proche de la position 1 du curseur, mais juste en avant de celle-ci dans le sens anti-horaire, et une position angulaire a3 située juste en avant de la position 2 du curseur; et
- une quatrième piste conductrice 33 comportant deux parties de contact concentriques avec les pistes conductrices 30 à 32, à savoir :
   . une première partie de contact 331 s'étendant entre la position 0 du curseur et la position angulaire α1
   . une seconde partie de contact 333 s'étendant entre la position 2 du curseur et une position angulaire α5 située juste en avant de la position 3 du curseur,
ces deux parties de contact étant reliées entre elles par une partie de liaison 332 située en retrait vers l'intérieur, et avec laquelle aucun des plots de contact 400 à 403 ne peut venir en contact.

La piste conductrice intérieure est reliée à une borne du moteur par un conducteur 21', l'autre borne du moteur étant reliée au sélecteur par le conducteur 21. La piste conductrice 31 est reliée au sélecteur par le conducteur 20. La piste conductrice 32 est reliée au sélecteur par le conducteur 22. Enfin la piste conductrice 33 est reliée au sélecteur par le conducteur 23.

Les positions 0 à 3 de l'arbre du moteur et du curseur correspondent quant à elles, respectivement, à des positions angulaires de 0°, de α2 = 81°, de α4 = 148° et de α6 = 216°.

Le dispositif décrit ci-dessus fonctionne comme suit. Lorsque l'arbre et le curseur sont dans la position 0, les pistes conductrices 30 et 33 sont mises en contact par le curseur. En amenant les commutateurs 10, 11 et 12 dans les positions illustrées, le moteur M est alimenté dans le sens antihoraire, et le curseur se déplace vers la position 1. Dès que le curseur quitte la partie de contact 331 de la piste conductrice 33 (position α1), l'alimentation du moteur est interrompue et l'arbre du moteur et le curseur atteignent par inertie la position 1, dans laquelle le curseur est en contact avec la piste conductrice 32, qui toutefois n'est pas alimentée. L'extrémité de la partie de contact 331 (position α1) définit ainsi une position d'arrêt 1 (position α2) où le curseur 40 est en contact avec la piste conductrice 32.

Si maintenant on bascule vers le bas le commutateur 12, l'alimentation du moteur est rétablie via la piste conductrice 32, le curseur 40 et la piste conductrice 30, et l'arbre du moteur et le curseur se dirigent vers la position 2. Dès que le curseur quitte la piste conductrice 32 (position α3), l'alimentation est à nouveau interrompue et le correcteur atteint par son inertie la position 2, tandis que le curseur est venu en contact avec la partie de contact 333 de la piste conductrice 33.

Si on bascule à nouveau vers le haut le commutateur 12, le moteur est à nouveau alimenté via la piste conductrice 33 et la rotation recommence en direction de la position 3. Dès que le curseur quitte la partie de contact 333, le moteur s'arrête à nouveau après un ralentissement sous l'effet de son inertie, pour stabiliser le correcteur dans la position 3.

Si maintenant on bascule les interrupteurs 10 et 11 vers le bas, le moteur M est alors alimenté sous polarité inverse d'un côté via le conducteur 21 relié à la tension d'alimentation +V, et de l'autre côté via le conducteur 20, la piste conductrice 31, le curseur 40 et la piste conductrice 30, pour entraîner son arbre de sortie et le curseur 40 dans le sens horaire, jusqu'à l'extrémité de la piste conductrice 31 (position α0) où le curseur va finalement rejoindre la position 0. (On notera que ce retour en position 0 peut s'effectuer à partir de n'importe laquelle des positions 1 à 3.)

En effectuant à nouveau l'une ou l'autre des commutations décrites plus haut, on peut alors si on le désire ramener le correcteur dans la position 1 ou 2.

Bien entendu, le sélecteur S est conçu pour que les différents basculements organisés des commutateurs 10 à 12 soient provoqués par la simple rotation d'un organe de manoeuvre rotatif à quatre positions, dont on décrira plus loin un exemple de réalisation.

On comprend que le dispositif de commande selon cette première forme de réalisation peut être sans difficulté transposé à un nombre de positions discrètes quelconque, déterminé par une répartition alternée appropriée entre les parties de contact de la piste conductrice extérieure 33 et des parties de contact de la piste conductrice 32. Mais dans tous les cas, un ensemble de quatre conducteurs 20 à 23 reste suffisant pour faire fonctionner l'ensemble sélecteur/correcteur.

La figure 2 illustre une variante de réalisation du dispositif de la figure 1, qui se distingue de celui-ci de première part en ce que le conducteur 20 est supprimé, de seconde part en ce que l'agencement des commutateurs 10 à 12 est modifié, et de troisième part en ce qu'une diode D12 est rajoutée entre les pistes conductrices 31 et 32 du correcteur C, en étant passante de la piste conductrice 31 vers la piste conductrice 32.

De la même manière que précédemment, le passage d'une position à l'autre dans le sens anti-horaire est réalisé en en plaçant les commutateurs 10 et 11 dans la position illustrée, et en basculant alternativement le commutateur 12 d'une position à l'autre, les pistes conductrices 32 et 33 alimentant alternativement le moteur avec la tension +V.

En revanche, pour revenir à la position 0, on bascule vers le bas les deux commutateurs 10 et 11, tandis que le commutateur 12 est placé en position basse. Il en résulte que le moteur M reçoit la tension +V via le commutateur 10 et le conducteur 21, tandis qu'il est mis à la masse sur son autre borne via le conducteur 21', la piste conductrice 30, le curseur 40, la piste conductrice 31, la diode D12, la piste conductrice 32, le conducteur 22 et les commutateurs 12 et 11, pour faire tourner son arbre et le curseur dans le sens horaire.

Ici encore, on pourrait multiplier le nombre de positions discrètes du correcteur, tout en conservant entre le sélecteur et le correcteur un faisceau électrique à trois conducteurs.

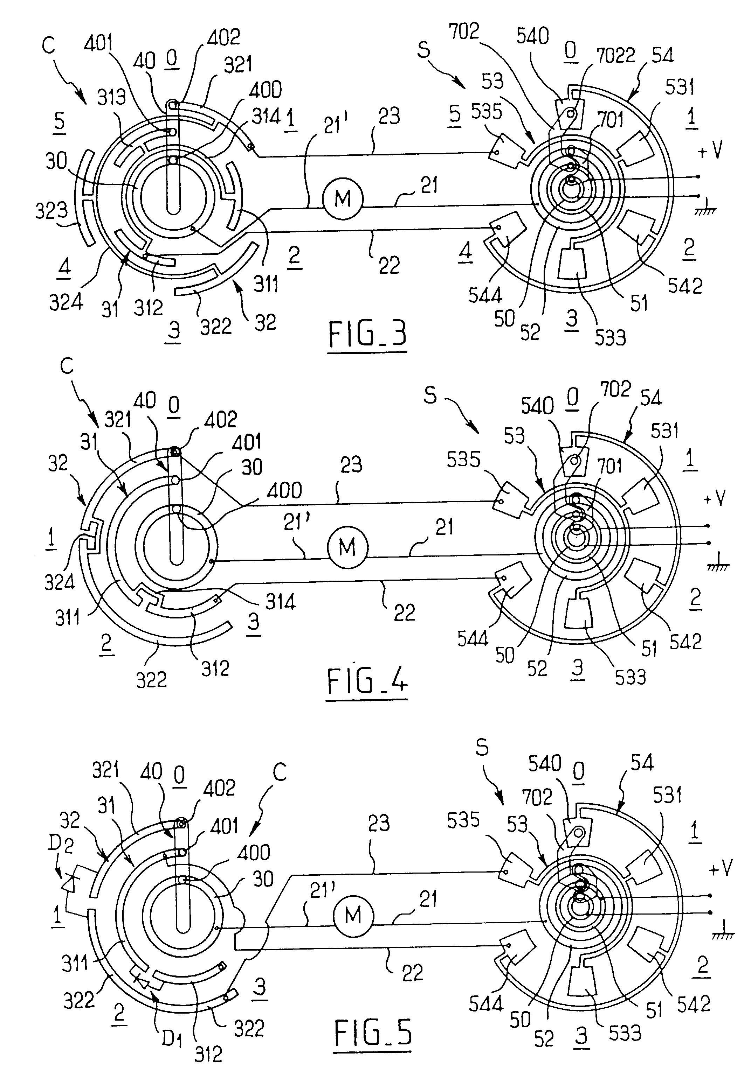

La figure 3 illustre une deuxième forme de réalisation de la présente invention, qui est en l'espèce un dispositif à six positions discrètes désignées par 0 à 5.

Le sélecteur S sera décrit en détail plus loin en référence à la figure 4.

Le correcteur C comprend dans ce cas, outre le moteur M et un curseur radial 40 solidaire en rotation de l'arbre de sortie du moteur et pourvu de trois plots de contact alignés 400 à 402, un jeu de pistes conductrices qui comprend, de l'intérieur vers l'extérieur :
- une piste conductrice annulaire continue 30 reliée au moteur par un conducteur 21';
- une piste conductrice 31 comportant trois parties de contact 311, 312 et 313 reliées ensemble par une partie de liaison 314 avec laquelle le curseur 40 ne peut pas venir en contact, lesdites parties de contact s'étendant respectivement entre les positions 1 et 2, entre les positions 3 et 4 et entre les positions 5 et 0;
- une piste conductrice 32 comportant trois parties de contact 321, 322 et 323 reliées ensemble par une partie de liaison 324 avec laquelle le curseur 40 ne peut pas venir en contact, lesdites parties de contact s'étendant respectivement entre les positions 0 et 1, entre les positions 2 et 3 et entre les positions 4 et 5.

L'inversion de polarité du moteur est ici assurée au sein même du sélecteur S, comme on le décrira plus loin, tandis qu'en connectant alternativement les pistes conductrices 31 et 32 à la tension +V (rotation dans le sens anti-horaire) ou à la masse (rotation dans le sens horaire), on assure le déplacement du correcteur d'une position à la position suivante ou à la position précédente, selon la polarité.

La figure 4 illustre une troisième forme de réalisation de l'invention, dans laquelle l'agencement des pistes conductrices du correcteur C est différent. Il s'agit à nouveau d'un dispositif à quatre positions discrètes 0 à 3.

Plus précisément, on trouve de l'intérieur vers l'extérieur :
- une piste conductrice annulaire continue 30 identique à celle de la figure 3;
- une piste conductrice 31 comportant deux parties de contact 311 et 312 séparées par un interstice au niveau de la position 2, mais reliées électriquement ensemble par une partie de liaison 314 avecc laquelle le curseur 40 ne peut pas venir en contact; et
- une piste conductrice 32 comportant deux parties de contact 321 et 322 séparées par un interstice au niveau de la position 1, mais reliées électriquement ensemble par une partie de liaison 324 avec laquelle le curseur 40 ne peut pas venir en contact.

On notera par ailleurs que les extrémités des pistes conductrices 31 et 32 au niveau des positions angulaires extrêmes 0 et 3 sont légèrement décalées. Plus précisément, au niveau de la position 0, la partie de contact 311 se termine légèrement en retrait de la partie de contact 321 tandis qu'au niveau de la position 3, la partie de contact 322 se termine légèrement en retrait de la partie de contact 312.

Le dispositif fonctionne ici encore en alimentant le moteur alternativement via les pistes conductrices 31 et 32, les positions d'arrêt intermédiaires étant définies par les interstices précités au niveau des positions 1 et 2, et la reprise de la rotation s'effectuant, au niveau de chaque position, par la piste conductrice qui est restée en contact avec le curseur 40.

De la même manière que précédemment, l'inversion de polarité est réalisée dans ce cas par le sélecteur S.

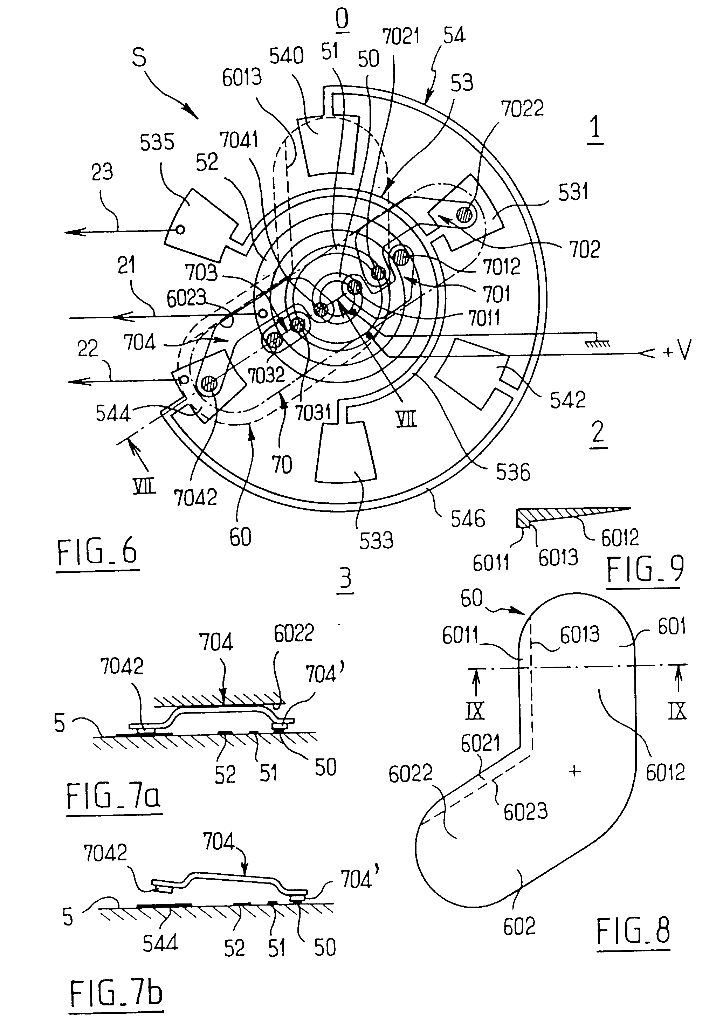

La figure 5 illustre une variante de réalisation du dispositif de la figure 4, qui diffère de celui-ci par le fait que les parties de liaison 314 et 324 des pistes conductrices 31 et 32 sont remplacées par deux diodes D1 et D2, respectivement. La diode D1 est branchée dans le sens conducteur de la partie de contact 312 vers la partie de contact 311, tandis que la diode D2 est branchée dans le sens conducteur de la partie de contact 322 vers la partie de contact 321. Dans ce cas, il est impératif que le conducteur 22 soit relié uniquement à la partie de contact 311, et que le conducteur 23 soit relié uniquement à la partie de contact 322.

Ces diodes ont pour objet d'éviter que l'arbre de sortie du moteur et le curseur 40 ne quittent l'intervalle angulaire autorisé de fonctionnement, s'étendant entre les positions 0 et 3 via les positions 1 et 2. Plus précisément, et en supposant que le curseur 40 se trouve dans la position 0 et qu'accidentellement, le sélecteur cherche à alimenter le moteur M avec une polarité tendant à le faire tourner dans le sens horaire, c'est-à-dire à l'éloigner de la position 1, alors le courant qui devrait alimenter le moteur est bloquée par la diode D2 interposée sur le trajet.

De même, si accidentellement on cherche à faire tourner le moteur dans le sens anti-horaire à partir de la position 3, la diode D1 empêche tout courant de circuler dans le moteur.

On va maintenant décrire en détail en référence aux figures 6 à 10 un exemple de réalisation d'un sélecteur S, utilisable par exemple dans les formes de réalisation des figures 4 et 5.

Ce sélecteur comprend, sur une plaque isolante fixe 5, un ensemble de pistes conductrices, à savoir, de l'intérieur vers l'extérieur :
- des première, seconde et troisième pistes conductrices annulaires continues 50, 51 et 52, disposées concentriquement;
- une quatrième piste conductrice 53 comportant trois pavés de contact 531, 533 et 535 disposés sur un même cercle concentrique avec les pistes conductrices annulaires 50 à 52 en des positions espacées mutuellement de 120° et reliés entre eux par une partie de liaison 536;
- une cinquième piste conductrice 54 comportant trois pavés de contact 540, 542 et 544 disposés sur le même cercle que les pavés 531, 533 et 535, en des positions espacées mutuellement de 120° et intercalés entre lesdits pavés 531, 533 et 535, l'intervalle angulaire entre deux pavés de contact successifs étant de 60°; ces pavés 540, 542 et 544 sont reliés entre eux par une partie de liaison 546.

Le sélecteur comprend également un organe de manoeuvre (non représenté), qui est monté rotatif sur un axe de façon concentrique avec les pistes conductrices annulaires 50 à 52, et qui est solidaire en rotation avec un élément mobile d'entraînement 60 réalisé en matière isolante.

Cet élément 60, représenté en détail sur les figures 8 et 9, comprend deux branches 601 et 602 dont les grands axes font l'un avec l'autre un angle de 120°. Chacune de ces branches présente une surface inférieure, respectivement 6012, 6022, qui constitue une rampe inclinée, l'épaisseur de chaque branche augmentant progressivement à mesure que l'on passe de son bord tourné vers l'angle ouvert de 240° défini entre les branches vers son bord tourné vers l'angle fermé de 120°.

En outre, au niveau et le long de ce dernier bord, chaque branche comporte un épaulement rectiligne, respectivement 6013 et 6023, défini par une nervure en saillie vers le bas.

L'élément d'entraînement 60 est monté dans le sélecteur de façon à ce que sa face inférieure, pourvue des rampes et des épaulements décrits ci-dessus, surplombe les pistes conductrices 50 à 54.

Le sélecteur comporte en outre un élément mobile de commutation 70, qui est monté sur l'axe commun aux pistes conductrices et à l'élément d'entraînement 60 de manière à pouvoir, en l'absence dudit élément d'entraînement, tourner librement.

L'élément mobile de commutation 70 consiste en un curseur à contacts mobiles constitué par une plaque allongée en matériau isolant, sur laquelle sont montés quatre pontets de commutation actionnables en ouverture/fermeture par l'élément 60 comme on va le voir plus loin.

Un premier pontet 701 comporte à ses extrémités opposées deux plots de contact 7011 et 7012 qui se situent à l'aplomb des pistes conductrices annulaires 50 et 52, respectivement.

Un second pontet 702 comporte à ses extrémités opposées deux plots de contact 7021 et 7022 qui se situent à l'aplomb de la piste conductrice annulaire 51 et du cercle des pavés de contact, respectivement.

Un troisième pontet 703 comporte à ses extrémités opposées deux plots de contact 7031 et 7032 qui se situent à l'aplomb des pistes conductrices annulaires 51 et 52, respectivement.

Enfin un quatrième pontet 704 comporte à ses extrémités opposés deux plots de contact 7041 et 7042 qui se situent à l'aplomb de la piste conductrice annulaire 50 et du cercle des pavés de contact, respectivement.

Les huit plots de contact sont alignés diamétralement sur l'élément 70, les parties réunissant deux à deux lesdits plots étant conformées pour certaines en forme générale de "U" de manière à éviter tout contact entre elles.

En référence maintenant aux figures 7a et 7b, qui illustre le cas du pontet 704 mais qui s'applique de la même manière aux autres pontets, on observe que le pontet est apte à être sollicité par la partie en rampe 6022 de l'élément d'entraînement 60 qui le surplombe, de manière à ce que les deux plots soient en contact par pression sur les pistes conductrices ou pavés de contact associés (en l'occurrence 50 et 544), pour court-circuiter ceux-ci. En revanche, lorsque le pontet n'est plus surmonté par l'élément d'entraînement 60, son élasticité propre va faire en sorte qu'au moins l'un des deux plots de contact 7041 et 7042 quitte la piste conductrice ou le pavé de contact associé, pour rompre le contact entre les pistes conductrices ou pavés associés.

Naturellement, la partie de support isolante de l'élément de commutation 70 comporte des moyens appropriés pour retenir et guider les différents pontets de manière à ce qu'ils puissent adopter le comportement précité.

On observera en outre que les épaulements 6013 et 6023 formés sur l'élément d'entraînement isolant 60 sont aptes à entraîner en rotation l'élément 70 lorsque ces épaulements viennent en contact mécanique avec un bord en vis-à-vis dudit élément 70, cet entraînement étant unidirectionnel du fait que chaque branche 601, 602 de l'élément 60 ne comporte qu'un seul épaulement. Plus précisément, l'épaulement 6013 est apte à solliciter l'élément 70 seulement dans le sens horaire (lorsque l'élément 60 tourne dans ce sens), tandis que l'épaulement 6023 est apte à solliciter l'élément 70 seulement dans le sens anti-horaire (lorsque l'élément 60 tourne dans ce sens).

Le sélecteur S tel que décrit ci-dessus est connecté à son environnement de la façon suivante, illustrée sur les figures 3 à 5 :
- la piste conductrice annulaire 50 est reliée à la masse;
- la piste conductrice annulaire 51 est reliée à la tension continue d'alimentation +V;
- la piste conductrice annulaire 52 est reliée au conducteur 21, qui aboutit côté correcteur à une borne du moteur M;
- la piste conductrice 53 est reliée à la piste conductrice 32 du correcteur via le conducteur 23;
- enfin la piste conductrice 54 est reliée à la piste conductrice 31 du correcteur via le conducteur 22.

Bien entendu, les différents éléments du sélecteur sont abrités dans un boîtier isolant approprié, à partir duquel fait saillie l'organe de manoeuvre tel qu'un bouton, qui fait tourner l'élément d'entraînement 60 dans un sens ou dans l'autre.

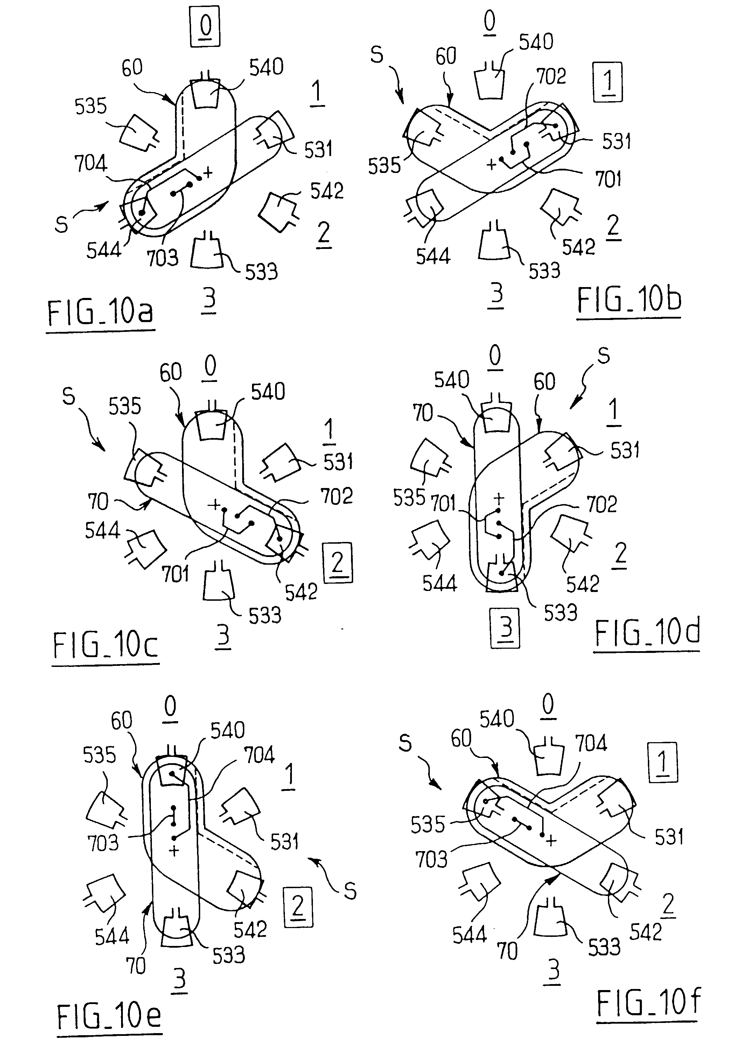

Le fonctionnement du sélecteur décrit ci-dessus va maintenant être expliqué en référence aux figures 10a à 10f.

Sur la figure 10a, le sélecteur est en position 0, ce qui est matérialisé par le fait que la branche 601 de l'élément 60 se trouve en face de la position 0. Dans cette position du sélecteur, comme on l'expliquera plus loin, l'élément de commutation 70 occupe nécessairement la position illustrée, dans laquelle c'est la branche 602 de l'élément 60 qui surplombe la partie homologue de l'élément.

Il en résulte que les pontets 703 et 704 court-circuitent les pistes conductrices concernées, tandis que les pontets 701 et 702 sont ouverts. En conséquence, le conducteur 21 est relié via la piste conductrice 52, le pontet 703 et la piste conductrice 51, à la tension +V, tandis que le conducteur 22 est relié à la masse via la piste conductrice 54, le pontet 704 et la piste conductrice 50.

Le sélecteur est amené en position 1 (figure 10b) en faisant tourner l'élément d'entraînement 60 sur 60° dans le sens horaire. Au cours de ce mouvement, l'élément de commutation 70 n'est pas sollicité par l'élément 60 et conserve sa position. En revanche, du fait que c'est maintenant la branche 601 de l'élément 60 qui surmonte l'élément 70, les pontets 703 et 704 sont ouverts, tandis que les pontets 701 et 702 sont fermés.

Il en résulte que le conducteur 23 est à +V, le conducteur 22 est en l'air et le conducteur 21 est à la masse.

Avec le correcteur décrit par exemple en référence à la figure 4, il en résulte un mouvement du correcteur de la position 0 vers la position 1.

Lorsque le sélecteur est amené dans la position 2 (figure 10c), il entraîne avec lui sur 60°, par le jeu de l'épaulement 6013 de l'élément d'entraînement 60, l'élément de commutation 70. L'état ouvert/fermé des pontets 701 à 704 ne change pas, et le seul changement quant aux tensions présentes sur les conducteurs 21, 22 et 23 est le fait que la tension +V est passée du conducteur 23 au conducteur 22. Il en résulte que le correcteur avance jusqu'à la position 2. De même, en amenant le sélecteur jusqu'à la position 3 (figure 10d), on entraîne à nouveau l'élément de commutation 70 sur 60° et la tension +V passe à nouveau sur le conducteur 23. Le correcteur avance donc jusqu'à la même position.

Lorsque maintenant on ramène le sélecteur de la position 3 à la position 2 (figure 10e), l'élément de commutation 70 n'est pas sollicité par l'élément d'entraînement 60 et reste immobile. En revanche, c'est maintenant la branche 602 de l'élément 60 qui, par sa rampe 6022, sollicite les pontets 703 et 704 pour qu'ils établissent le pontage entre les pistes conductrices associées, tandis que les pontets 701 et 702 deviennent ouverts.

Il en résulte que le conducteur 22 est mis au potentiel de masse par le pontet 704, tandis que le conducteur 21 est mis à la tension +V par le pontet 703. Le conducteur 23 est en l'air. On remarque ici que le moteur M du correcteur C est alors soumis à une inversion de polarité, et va pouvoir reculer de la position 3 jusqu'à la position 2.

Le passage du sélecteur de la position 2 à la position 1 entraîne l'élément de commutation 70 sur 60° dans le sens anti-horaire (figure 10f), et c'est maintenant le conducteur 23 qui est à la masse, tandis que le conducteur 22 est en l'air. Le correcteur passe donc de la position 2 à la position 1.

Enfin le passage du sélecteur de la position 1 à la position 0 (figure 10a) entraîne un nouveau basculement de la masse sur le conducteur 22, et le retour du correcteur en position 0, ce qui correspond à la situation de départ.

On observera ici qu'avec le sélecteur tel que décrit, on peut effectuer des commandes manuelles quelconques au niveau de ce sélecteur, le correcteur C réagissant toujours conformément à la consigne.

On comprend en outre que, de même que le correcteur C décrit plus haut peut adopter plus de quatre positions discrètes, le sélecteur S peut lui aussi permettre une commande sur plus de quatre position discrètes, en multipliant de façon appropriée le nombre de pavés de contact des pistes conductrices 53 et 54 et en diminuant leur espacement angulaire.

Dans tous les cas, le nombre de conducteurs requis entre le sélecteur et le correcteur reste égal à trois, ou à quatre pour le mode de réalisation de la figure 1.

On remarquera de plus que le dispositif n'utilise qu'un seul niveau de tension +V, à savoir la tension fournie par l'alimentation, par exemple la batterie du véhicule.

On notera pour terminer que le correcteur et le sélecteur selon l'invention peuvent être utilisés indépendamment l'un de l'autre.

## Revendications

1. Dispositif correcteur (C) de l'orientation du faisceau lumineux d'un projecteur de véhicule automobile en fonction de signaux de commande présents sur un faisceau électrique de conducteurs (20-23), le dispositif correcteur comprenant un moteur électrique (M) entraînant une pièce optique du projecteur et un ensemble de commutation comportant une pluralité de pistes conductrices (30-33) reliées aux divers conducteurs du faisceau électrique et des moyens formant curseur reliés électriquement au moteur électrique et dont les mouvements sont commandés par ledit moteur pour qu'ils se déplacent sur lesdites pistes conductrices, de manière à définir un ensemble de position d'arrêt discrètes (0-3; 0-5) du moteur, dispositif caractérisé en ce que les moyens formant curseur comprennent un curseur unique (40) relié à une première borne d'alimentation du moteur, en ce qu'une seconde borne d'alimentation du moteur est reliée à un conducteur (21) du faisceau électrique, et en ce qu'il est prévu deux pistes conductrices (32, 33; 31, 32) reliées à deux autres conducteurs (22, 23) du faisceau électrique aptes à alternativement appliquer au dispositif un même potentiel d'alimentation (+V; masse), les deux pistes conductrices comportant des zones de contact avec le curseur, zones de contact dont des extrémités définissent les positions d'arrêt du moteur et du curseur, la position mutuelle desdites zones de contact étant telle que, dans une position d'arrêt définie par l'une des pistes conductrices, le curseur est en contact avec une zone de contact de l'autre piste conductrice.

2. Dispositif selon la revendication 1, caractérisé en ce que ledit curseur (40) est relié à la première borne d'alimentation du moteur (M) par une troisième piste conductrice (30).

3. Dispositif selon la revendication 2, caractérisé en ce qu'il est prévu une quatrième piste conductrice (31) en contact avec le curseur dans une première position d'arrêt extrême (3) et dont une extrémité éloignée de ladite première position d'arrêt extrême définit la seconde position d'arrêt extrême (0).

4. Dispositif selon la revendication 3, caractérisé en ce que ladite quatrième piste conductrice (31) est reliée à un quatrième conducteur (20), d'inversion de mouvement, du faisceau électrique.

5. Dispositif selon la revendication 3, caractérisé en ce que ladite quatrième piste conductrice (31) est reliée à l'une des deux premières pistes conductrices (32) par l'intermédiaire d'une diode (D12).

6. Dispositif selon l'une des revendications 1 à 5, caractérisé en ce que chacune des deux premières pistes conductrices (31, 32) -comprend deux zones de contact électriquement reliées l'une à l'autre.

7. Dispositif selon la revendication 6, caractérisé en ce que lesdites zones de contact couvrent des zones de déplacement du curseur essentiellement complémentaires.

8. Dispositif selon la revendication 6, caractérisé en ce que lesdites zones de contact des deux premières pistes conductrices se chevauchent et définissent des interstices mutuellement décalés, situés alternativement au niveau de la première piste conductrice (31) et au niveau de la seconde piste conductrice (32).

9. Dispositif selon la revendication 7 ou 8, caractérisé en ce que lesdites zones de contact des deux premières pistes conductrices sont électriquement reliées entre elles par des zones de liaison conductrices (314, 324) décalées par rapport à des plots de frottement (401, 402) du curseur repectivement associés aux première et seconde pistes conductrices.

10. Dispositif selon la revendication 8, caractérisé en ce que lesdites zones de contact des deux premières pistes conductrices sont électriquement reliées entre elles par des diodes (D1, D2), l'une des diodes (D2) étant branchée en direct entre un point de liaison de la piste conductrice associée (32) au conducteur associé (23) du faisceau électrique et une extrémité de ladite piste conductrice correspondant à une première position d'arrêt extrême (0), tandis que l'autre diode (D1) est branchée en inverse entre un point de liaison de la piste conductrice associée (31) au conducteur associé (22) du faisceau électrique et une extrémité de ladite piste conductrice correspondant à une seconde position d'arrêt extrême (3).

11. Dispositif selon l'une des revendications 1 à 10, caractérisé en ce que le curseur (40) est monté sur un arbre de sortie rotatif du moteur (M) et en ce que lesdites pistes conductrices (30-33) sont disposées essentiellement concentriquement autour de l'axe dudit arbre de sortie.

12. Dispositif sélecteur (S), notamment pour un dispositif correcteur selon l'une des revendications 1 à 11, destiné à appliquer sur des conducteurs d'un faisceau électrique des signaux de commande variant en fonction de la position d'un organe de manoeuvre du sélecteur, caractérisé en ce qu'il comprend :
des première et seconde pistes conductrices (53, 54) comportant des zones de contact localisées reliées électriquement entre elles au niveau de chaque piste conductrice et disposées de façon alternée sur une trajectoire donnée, lesdites première et seconde pistes conductrices étant reliées à deux premiers conducteurs (23, 22) du faisceau électrique, et
un curseur (70) entraîné par l'organe de manoeuvre sur ladite trajectoire donnée et relié à une source d'alimentation électrique (+V, masse).

13. Dispositif selon la revendication 12, caractérisé en ce qu'il comprend en outre une troisième piste conductrice (52) reliée à un troisième conducteur (21) du faisceau électrique, et des moyens d'inversion de la polarité des signaux de commande présents entre l'un des premier et second conducteurs (23, 22) et le troisième conducteur (21).

14. Dispositif selon la revendication 13, caractérisé en ce que les moyens d'inversion de polarité comprennent un ensemble de contacts mobiles (701-704) montés sur le curseur (70), des quatrième -et cinquième pistes (51, 50) conductrices reliées respectivement aux deux bornes (+V, masse) d'une source d'alimentation électrique, et un organe d'entraînement (60) mû par le déplacement de l'organe de manoeuvre, apte à entraîner ledit curseur à contacts mobiles selon une course de déplacement tronquée à ses deux extrémités par rapport à la course de déplacement dudit organe d'entraînement, et apte à solliciter lesdits contacts mobiles du curseur pour les amener sélectivement en et hors de contact avec lesdites pistes conductrices (50-54).

15. Dispositif selon la revendication 14, caractérisé en ce que l'étendue de chaque partie de course tronquée du curseur est égale au pas des zones de contact sur ladite trajectoire donnée.

16. Dispositif selon l'une des revendications 14 et 15 15, caractérisé en ce que l'organe d'entraînement (60) et le curseur (70) sont rotatifs autour d'un axe commun, et en ce que les pistes conductrices (50-54) sont disposées généralement concentriquement audit axe commun.

17. Dispositif selon les revendications 15 et 16 prises en combinaison, caractérisé en ce que le curseur (70) comporte des contacts mobiles dans deux branches situées de part et d'autre dudit axe commun et aptes à coopérer respectivement avec deux branches (601, 602) de l'élément d'entraînement situées de part et d'autre dudit axe commun, et en ce que la différence entre l'angle formé par les deux branches du curseur et l'angle formé par les deux branches de l'organe d'entraînement est égal au pas angulaire desdites zones de contact des première et seconde pistes conductrices sur la trajectoire donnée, qui est circulaire.

18. Dispositif selon la revendication 17, caractérisé en ce que l'organe d'entraînement (60) présente la forme générale d'un "V", tandis que le curseur (70) présente une forme générale rectiligne.

19. Dispositif selon l'une des revendications 17 et 18, caractérisé en ce que chaque branche de l'organe d'entraînement (60) comprend une rampe (6012, 6022) apte à solliciter les contacts mobiles (701, 702, 703, 704) de la branche associée du curseur et se terminant par un épaulement (6013, 6023) apte à coopérer avec un bord de la branche associée du curseur pour entraîner ce dernier.

20. Dispositif selon l'une des revendications 14 à 19, caractérisé en ce que le curseur comporte quatre contacts mobiles consistant en quatre pontets (701-704), un premier pontet (701) étant apte à relier la troisième piste conductrice (52) à la cinquième piste conductrice (50), un second pontet (702) étant apte à relier l'une des première et deuxième pistes conductrices (53, 54) à la quatrième piste conductrice (51), un troisième pontet (703) étant apte à relier la troisième piste conductrice (52) à la quatrième piste conductrice (51), et un quatrième pontet (704) étant apte à relier l'une des première et deuxième pistes conductrices (53, 54) à la cinquième piste conductrice (50).

21. Dispositif selon les revendications 17 et 20 prises en combinaison, caractérisé en ce que les premier et second pontets (701, 702) sont situés dans une première branche du curseur (70), et les troisième et quatrième pontets (703, 704) sont situés dans une seconde branche du curseur.
